# DEMANDE DE BREVET EUROPEEN

(11) **EP 2 735 398 A1**
(43) Date de publication de la demande: **28.05.2014**
(21) Numéro de dépôt: 12193622.3
(22) Date de dépôt: 21.11.2012
(51) Int. Cl.: B23K 35/02, B23K 35/362, B23K 35/40

(54) **Fil fourré de soudage ou de placage**

(71) Demandeur: FRO - Air Liquide Welding Italia S.P.A., 37135 Verone (IT)
(72) Inventeur: Scappin, Michele, 31003 Castelfranco (IT); Toffanello, Laura, 35013 CIittadella (PD) (IT)
(74) Mandataire: Pittis, Olivier

(57) **Abrégé**

L'invention porte sur un fil fourré étanche (1) formé d'une enveloppe métallique tubulaire externe (2) comprenant un joint de soudage (4) longitudinal sur toute la longueur (L) dudit fil fourré (1), ladite enveloppe tubulaire externe (2) contenant un flux interne (3) comprenant un ou plusieurs composés dangereux pour la santé en une proportion inférieure ou égale à 65% en masse par rapport à la masse de flux interne (3). Le fil (1) a un diamètre externe (D) compris entre 0,5 et 5 mm, et l'enveloppe tubulaire (2) a une épaisseur de paroi (E) égale à au moins 10% du diamètre externe (D) du fil (1). Les fils fourrés ainsi fabriqués sont utilisables en placage ou en soudage à l'arc de type MIG/MAG ou à l'arc submergé.

## Description

L'invention concerne un fil fourré étanche destiné au soudage ou au placage comprenant une enveloppe métallique externe tubulaire contenant un flux de remplissage contenant un ou plusieurs composés dangereux pour la santé humaine, en particulier un ou plusieurs composés nocifs, toxique, cancérogène et/ou radioactif, et son procédé de fabrication.

Les fils fourrés sont utilisés dans certains procédés de soudage ou de placage, notamment en soudage à l'arc, par exemple en soudage MIG/MAG ou à l'arc submergé.

Un fil fourré est habituellement constitué d'une enveloppe externe formée d'une bande métallique mise sous forme tubulaire, et d'un flux interne formé d'éléments de remplissage, tels des poudres ou des granulés.

Un fil fourré de soudage est notamment décrit par les documents US-A-6787736 ou FR-A-2766399.

La fabrication d'un fil fourré peut être réalisée selon plusieurs méthodes différentes présentant chacune des avantages et des inconvénients.

Un premier procédé de fabrication connu consiste à plier progressivement au moyen de galets formeurs ou analogue, une bande métallique ou « feuillard » et à la remplir d'un flux de remplissage contenant des éléments pulvérulents ou granulaires. Cette feuille ou bande métallique qui va constituer l'enveloppe externe du fil, est donc d'abord mise en forme de gouttière (section en « U ») par rapprochement progressif l'un vers l'autre de ses deux bords longitudinaux, puis du flux de remplissage est introduit dans cette gouttière, et le formage est poursuivi jusqu'à aboutir à une forme tubulaire (section en « O ») non scellée, laquelle est ensuite tréfilée jusqu'au diamètre d'utilisation désiré, par exemple de 0,8 à 5 mm de diamètre.

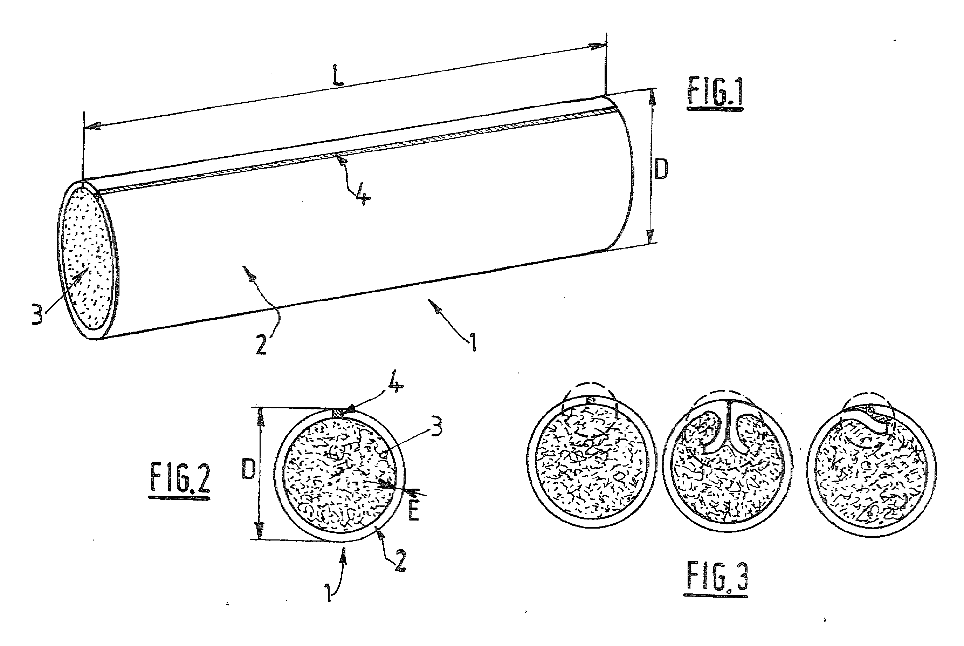

Dans ce cas, les deux bords longitudinaux du tube formant le fil ne sont pas soudés mais simplement rapprochés très près l'un de l'autre, comme illustré en Figure 3.

Un fil fourré ainsi obtenu n'est donc pas étanche, ce qui engendre un certain nombre d'inconvénients, notamment des pertes de poudre provenant du flux de remplissage qui peuvent avoir lieu notamment:
- lors du dévidage de la bobine ou du fût contenant le fil avant ou pendant une opération de soudage,
- lors du passage du fil entre les galets alimentant la torche de soudage,
- lors du passage du fil dans la gaine de guidage reliée à la torche de soudage,
- pendant la manipulation du fil par l'opérateur, et
- lors de son bobinage juste après sa fabrication.

La poudre qui s'échappe du fil fourré contamine alors les équipements et les utilisateurs.

Or, de telles pertes de poudre posent un réel problème de santé pour les utilisateurs lorsque le flux contient des composés dangereux pour la santé, tel que des composés nocifs, toxiques, cancérogènes ou radioactifs.

De tels fils fourrés non étanches ne sont donc pas recommandés lorsque les poudres contenues dans le flux de remplissage contiennent des composés dangereux pour la santé, tel que des composés nocifs, toxiques, cancérogènes ou radioactifs.

Afin de résoudre ce problème, il a été proposé un procédé de fabrication alternatif, notamment décrit par les documents EP-A-847831 et JP-A-58148096, dans lequel on produit un fil tubulaire étanche, c'est-à-dire un fil fourré ne laissant plus échapper de poudre entre ses bords longitudinaux puisque ceux-ci sont soudés l'un à l'autre sur toute leur longueur, avant d'être tréfilés au diamètre d'utilisation désiré.

Ce deuxième procédé de fabrication est plus complexe à mettre en oeuvre mais permet de produire des fils fourrés qui peuvent être parfaitement étanches. Ces fils fourrés peuvent donc, en théorie, être totalement insensibles à la perte de poudres pendant la production, le bobinage et surtout pendant l'utilisation.

Toutefois, on a constaté en pratique que des ruptures de fil avec libération intempestive de poudres avaient lieu pendant le processus de fabrication, notamment pendant les opérations de tréfilage et/ou laminage post-soudage, ou postérieurement pendant le bobinage ou leur utilisation, c'est-à-dire lors du soudage.

Le problème qui se pose est proposé un fil fourré de soudage ou placage amélioré contenant un flux pulvérulente comprenant un ou des composés dangereux pour la santé des personnes et/ou pour l'environnement, lequel présente un risque de rupture et donc de libération intempestive de poudre qui soit limité par rapport aux fils fourrés classiques.

La solution selon l'invention est un fil fourré étanche formé d'une enveloppe métallique tubulaire externe comprenant un joint de soudage longitudinal sur toute la longueur L dudit fil fourré, ladite enveloppe tubulaire externe contenant un flux interne comprenant un ou plusieurs composés dangereux (ou susceptible de l'être) pour la santé en une proportion inférieure ou égale à 65% en masse par rapport à la masse de flux interne, **caractérisé en ce que** le fil a un diamètre externe D compris entre 0,5 et 5 mm, et l'enveloppe tubulaire a une épaisseur de paroi E égale à au moins 10% du diamètre externe D du fil, c'est-à-dire que E ≥ 0,1 x D.

Selon le cas, le fil fourré étanche de l'invention peut comprendre l'une ou plusieurs des caractéristiques techniques suivantes :
- le flux interne comprend un ou plusieurs composés dangereux pour la santé choisis parmi des composés nocifs, toxiques, cancérogènes ou radioactifs.
- le flux interne comprend un ou plusieurs composés fluorés toxiques en une proportion massique dans le flux comprise entre 0,01 % et 50%, de préférence au moins un composé fluoré toxique choisi parmi NaF, AlF₃-₃NaF, K₂SiF₆, Na₃AlF₆ et LiF.
- le flux interne comprend un ou plusieurs composés nocifs en une proportion massique dans le flux comprise entre 0,01% et 30%, de préférence au moins un composé nocif choisi parmi FeB, BaCO₃, carbonate de lithium, SiO₂, FeMn et Mn.
- le flux interne comprend un ou plusieurs composés cancérogènes (y compris ceux suspectés d'être cancérogènes ou potentiellement cancérogènes) en une proportion massique dans le flux comprise entre 0,01% et 65%, de préférence au moins un composé cancérogène choisi parmi le nickel, le chrome, le cobalt et le cadmium.
- le flux interne comprend un ou plusieurs composés radioactifs présentant une émissivité supérieure à 1000 Bq/g, en une proportion massique dans le flux comprise entre 0,001% et 5%.
- le flux interne comprend un ou plusieurs composés radioactifs pouvant avoir une radioactivité propre ou dérivée de la présence d'un ou plusieurs éléments radioactifs.
- au moins un composé ou élément radioactif est choisi parmi thorium, uranium, radium, polonium, cobalt, césium, potassium, carbone et les terres rares, tel que cérium, yttrium, samarium, gadolinium, américium, terbium, ytterbium...
- il comprend une enveloppe en acier au carbone ou en acier inoxydable,
- l'enveloppe tubulaire a une épaisseur de paroi E égale à au moins 10 % du diamètre externe D du fil, de préférence à au moins 20 % du diamètre externe D du fil.
- l'enveloppe métallique tubulaire comprend un joint de soudage longitudinal sur toute sa longueur L réalisé par soudage par faisceau laser.
- le taux de remplissage du fil avec le flux est supérieur ou égal à 8 % en masse, de préférence entre 10 et 50 % en masse (% en masse de fil).
- le flux contient en outre un ou plusieurs autres éléments choisis parmi la poudre de fer, le rutile, les ferroalliages de Mn, Si, Cr, Mo, Ni, B et/ou Ti, ou les oxydes de Mg ou Al.
- le fil a un diamètre compris entre 0,8 et 4 mm, typiquement d'au moins 1,2 mm.

L'invention concerne aussi un procédé de fabrication d'un fil fourré selon l'invention, telle que décrit ci-dessus, à partir d'une bande métallique et d'éléments de remplissage, dans lequel :
a) on rapproche progressivement, l'un vers l'autre, les deux bords longitudinaux de la bande métallique pour lui conférer une forme de « U », c'est-à-dire une forme de gouttière de section en « U »,
b) après formage en « U », on dépose un flux interne comprenant un ou plusieurs composés dangereux pour la santé en une proportion inférieure ou égale à 65% en masse par rapport à la masse totale de flux interne, entre les bords longitudinaux de la bande métallique,
c) on poursuit le formage par rapprochement, l'un vers l'autre, les deux bords longitudinaux de la bande métallique en forme de « U » jusqu'à aboutir à une forme tubulaire en « O » non scellée,
d) on soude ensemble les deux bords longitudinaux de la bande métallique mise sous forme tubulaire pour obtenir un fil soudé comprenant un joint de soudage longitudinal sur toute la longueur L dudit fil, ledit joint étant étanche sur toute la longueur L, et
e) on tréfile et/ou on lamine le fil jusqu'à obtenir un fil fourré de diamètre D final compris entre 0,5 et 5 mm et dont l'enveloppe tubulaire a une épaisseur de paroi E égale à au moins 10% du diamètre externe D du fil ; c'est-à-dire que E ≥ 0,1 x D.

Selon le cas, l'invention peut comprendre l'une ou plusieurs des caractéristiques techniques suivantes :
- à l'étape d), le soudage est opéré par un faisceau laser ou haute fréquence.
- à l'étape e), on tréfile et/ou on lamine le fil jusqu'à diamètre final inférieur ou égal à 4 mm, de préférence entre 0,8 à 4 mm de diamètre, typiquement d'au moins 1,2 mm.
- à l'étape b), le taux de remplissage du fil est supérieur à 8 % en masse, de préférence entre 12 et 50%.
- le flux interne contient en outre d'autres éléments ou composés choisis parmi la poudre de fer, le rutile, CaF₂, les ferroalliages de Mn, Si, Cr, Mo, Ni, B et/ou Ti, et les poudres minérales du type oxydes de Mg ou d'Al.
- le tréfilage est opéré à l'aide de galets presseurs ou des filières.
- le procédé est un procédé en continu mis en oeuvre sur une chaîne de fabrication en continu de fil fourré de soudage.
- le fil se déplace au fur et à mesure des différentes étapes susmentionnées, de préférence le fil se déplace grâce à des galets d'entraînement motorisés.
- le flux est à base métallique, c'est-à-dire qu'il comprend de la poudre de fer mélangée avec des ferroalliages de Mn, Si, Cr, Mo, Ni, B et/ou Ti.
- le flux est à base rutile, c'est-à-dire qu'il comprend de la poudre de rutile mélangée avec des ferroalliages de Mn, Si, Cr, Mo, Ni, B et/ou Ti, et/ou des poudres minérales comme des oxydes de Mg et/ou Al.

L'invention va maintenant être mieux comprise grâce à la description détaillée suivante faite en références aux Figures annexées parmi lesquels :
- la Figure 1 schématise un fil fourré étanche selon l'invention vu de côté,
- la Figure 2 schématise le fil de la Figure 1 vu en coupe transversale, et
- la Figure 3 illustre des fils fourrés non étanches selon l'art antérieur.

Les Figures 1 et 2 illustrent un mode de réalisation d'un fil fourré 1 étanche selon l'invention ayant un diamètre final de l'ordre de 1,2 mm, c'est-à-dire après remplissage et après tréfilage et/ou laminage et ce, sans engendrer de rupture du fil et de libération intempestive des poudres formant le flux 3 qu'il contient.

Ce fil fourré 1 comprend une enveloppe 2 externe tubulaire formée à partir d'une bande métallique mise sous forme tubulaire puis soudée sur toute sa longueur L, de préférence par faisceau laser de sorte d'obtenir un joint 4 étanche, et d'un flux interne 3 formé d'éléments de remplissage ou flux interne 3, à savoir des poudres et éventuellement des granulés, en particulier des composés dangereux pour la santé et/ou l'environnement, tels des composés nocifs, toxiques, cancérogènes ou radioactifs.

Plus précisément, ce fil fourré 1 est étanche et formé d'une enveloppe métallique tubulaire externe 2, encore appelé feuillard, comprenant un joint de soudage 4 longitudinal sur toute la longueur L dudit fil fourré 1, le joint 4 étant obtenu par soudage laser par exemple, à pleine pénétration ou à pénétration partielle uniquement.

Le flux interne 3 comprend un ou plusieurs composés dangereux pour la santé en une proportion inférieure ou égale à 65% en masse par rapport à la masse de flux interne 3, en particulier un ou plusieurs composés nocifs, toxiques, cancérogènes ou radioactifs.

Selon l'invention, la solution au problème de fuites de composés dangereux est basée sur l'utilisation d'un fil fourré totalement étanche sur toute sa longueur avec une épaisseur de l'enveloppe d'au minimum 10% de son diamètre extérieur qui est typiquement compris entre 0,5 et 5 mm, laquelle enveloppe est remplie avec les poudres dangereuses.

Ce fil fourré 1 est fabriqué sur une chaîne de fabrication en continu à partir d'une bande métallique et d'éléments de remplissage formant le flux interne 3, de préférence des éléments sous forme de poudre.

La bande métallique est entraînée par des galets d'entrainement motorisés de manière à obtenir une fabrication en continu du fil 1.

Tout d'abord, les deux bords longitudinaux de la bande métallique sont rapprochés progressivement, l'un vers l'autre, pour lui conférer une forme de « U », c'est-à-dire une forme de gouttière de section en « U », puis cette gouttière est totalement ou partiellement remplie le flux interne 3 comprenant un ou plusieurs composés dangereux pour la santé en une proportion inférieure ou égale à 65% en masse par rapport à la masse totale de flux interne, à savoir un ou des composés nocifs, toxiques, cancérogènes ou radioactifs.

Ensuite, le formage par rapprochement, l'un vers l'autre, les deux bords longitudinaux de la bande métallique en forme de « U » est continué jusqu'à aboutir à une forme tubulaire en « O » non scellée, et on effectue alors un soudage, de préférence par faisceau laser, des deux bords longitudinaux de la bande métallique mise sous forme tubulaire pour obtenir un fil soudé comprenant un joint de soudage 4 longitudinal étanche sur toute la longueur L du fil.

Le fil peut ensuite être tréfilé et/ou laminé jusqu'à son diamètre D final d'utilisation compris entre 0,5 et 5 mm, typiquement entre 0,8 et 4 mm.

Afin de garantir une étanchéité parfaite ou quasi-parfaite et éviter les pertes de poudres, l'enveloppe tubulaire 2 doit avoir une épaisseur de paroi E égale à au moins 10% du diamètre externe D du fil, soit E ≥ 0,1 x D. Ainsi, pour un fil de 1,2 mm de diamètre externe, on choisit au départ une feuille métallique dont l'épaisseur de paroi soit d'au moins 0,12 mm.

Le fil fourré étanche ainsi obtenu est particulièrement bien adapté au soudage à l'arc, en particulier MIG/MAG ou à l'arc submergé, ou au placage.

## Revendications

1. Fil fourré étanche (1) formé d'une enveloppe métallique tubulaire externe (2) comprenant un joint de soudage (4) longitudinal sur toute la longueur (L) dudit fil fourré (1), ladite enveloppe tubulaire externe (2) contenant un flux interne (3) comprenant un ou plusieurs composés dangereux pour la santé en une proportion inférieure ou égale à 65% en masse par rapport à la masse de flux interne (3), **caractérisé en ce que :**
- le fil (1) a un diamètre externe (D) compris entre 0,5 et 5 mm, et
- l'enveloppe tubulaire (2) a une épaisseur de paroi (E) égale à au moins 10% du diamètre externe (D) du fil (1).

2. Fil fourré selon la revendication précédente, **caractérisé en ce que** le flux interne (3) comprend un ou plusieurs composés dangereux pour la santé choisis parmi des composés nocifs, toxiques, cancérogènes ou radioactifs.

3. Fil fourré selon l'une des revendications précédentes, **caractérisé en ce que** le flux interne (3) comprend un ou plusieurs composés fluorés toxiques en une proportion massique dans le flux comprise entre 0,01% et 50% , de préférence au moins un composé fluoré toxique choisi parmi NaF, AlF₃₋₃NaF, K₂SiF₆, Na₃AlF₆ et LiF.

4. Fil fourré selon l'une des revendications précédentes, **caractérisé en ce que** le flux interne (3) comprend un ou plusieurs composés nocifs en une proportion massique dans le flux comprise entre 0,01 % et 30%, de préférence au moins un composé nocif choisi parmi FeB, BaCO₃, carbonate de lithium, SiO₂, FeMn et Mn.

5. Fil fourré selon l'une des revendications précédentes, **caractérisé en ce que** le flux interne (3) comprend un ou plusieurs composés cancérogènes ou potentiellement cancérogènes en une proportion massique dans le flux comprise entre 0,01% et 65%, de préférence au moins un composé cancérogène choisi parmi nickel, chrome, cobalt et cadmium.

6. Fil fourré selon l'une des revendications précédentes, **caractérisé en ce que** le flux interne (3) comprend un ou plusieurs composés radioactifs présentant une émissivité supérieure à 1000 Bq/g, en une proportion massique dans le flux comprise entre 0,001% et 5%.

7. Fil fourré selon l'une des revendications précédentes, **caractérisé en ce qu'il** comprend une enveloppe (2) en acier au carbone ou en acier inoxydable,

8. Fil fourré selon l'une des revendications précédentes, **caractérisé en ce que** l'enveloppe tubulaire (2) a une épaisseur de paroi (E) égale à au moins 10 % du diamètre externe (D) du fil (1), de préférence à au moins 20 % du diamètre externe (D) du fil (1).

9. Fil fourré selon l'une des revendications précédentes, **caractérisé en ce que** l'enveloppe métallique (2) tubulaire comprend un joint (4) de soudage longitudinal sur toute sa longueur (L) réalisé par soudage par faisceau laser.

10. Fil fourré selon l'une des revendications précédentes, **caractérisé en ce que** le taux de remplissage du fil (1) avec le flux (2) est supérieur ou égal à 8 % en masse, de préférence entre 10 et 50 % en masse (% en masse de fil).

11. Fil fourré selon l'une des revendications précédentes, **caractérisé en ce que** le flux (3) contient en outre un ou plusieurs autres éléments choisis parmi la poudre de fer, le rutile, les ferroalliages de Mn, Si, Cr, Mo, Ni, B et/ou Ti, ou les oxydes de Mg ou Al.

12. Fil fourré selon l'une des revendications précédentes, **caractérisé en ce que** le fil (1) a un diamètre compris entre 0,8 et 4 mm, typiquement d'au moins 1,2 mm.

13. Procédé de fabrication d'un fil fourré selon l'une des revendications précédentes à partir d'une bande métallique (2) et d'un flux (3), dans lequel :
a) on rapproche progressivement, l'un vers l'autre, les deux bords longitudinaux de la bande métallique pour lui conférer une forme de « U », c'est-à-dire une forme de gouttière de section en « U »,
b) après formage en « U », on dépose un flux interne (3) comprenant un ou plusieurs composés dangereux pour la santé en une proportion inférieure ou égale à 65% en masse par rapport à la masse totale de flux interne (3), entre les bords longitudinaux de la bande métallique,
c) on poursuit le formage par rapprochement, l'un vers l'autre, les deux bords longitudinaux de la bande métallique en forme de « U » jusqu'à aboutir à une forme tubulaire en « O » non scellée,
d) on soude ensemble les deux bords longitudinaux de la bande métallique mise sous forme tubulaire pour obtenir un fil soudé comprenant un joint de soudage (4) longitudinal sur toute la longueur (L) dudit fil, ledit joint (4) étant étanche sur toute la longueur (L), et
e) on tréfile et/ou on lamine le fil jusqu'à obtenir un fil fourré de diamètre (D) final compris entre 0,5 et 5 mm et dont l'enveloppe tubulaire (2) a une épaisseur de paroi (E) égale à au moins 10% du diamètre externe (D) du fil (1).

14. Procédé de soudage ou de placage à l'arc électrique mettant en oeuvre un fil fourré étanche fusible selon l'une des revendications 1 à 12.

15. Procédé de soudage selon la revendication 14, **caractérisé en ce qu'il** est choisi parmi les procédés de soudage MIG/MAG ou à l'arc submergé.

## Revendications modifiées

### Revendications modifiées conformément à la règle 137(2) CBE.

**1.** Fil fourré étanche (1) formé d'une enveloppe métallique tubulaire externe (2) comprenant un joint de soudage (4) longitudinal sur toute la longueur (L) dudit fil fourré (1), ladite enveloppe tubulaire externe (2) contenant un flux interne (3) comprenant un ou plusieurs composés dangereux pour la santé en une proportion inférieure ou égale à 65% en masse par rapport à la masse de flux interne (3), le fil (1) ayant un diamètre externe (D) compris entre 0,5 et 5 mm, et l'enveloppe tubulaire (2) ayant une épaisseur de paroi (E) égale à au moins 10% du diamètre externe (D) du fil (1), **caractérisé en ce que** le flux interne (3) comprend un ou plusieurs composés dangereux pour la santé choisis parmi des composés nocifs, toxiques, cancérogènes ou radioactifs, où :
- le ou les composés toxiques sont choisis parmi NaF, AlF₃₋₃NaF, K₂SiF₆, Na₃AlF₆ et LiF, et sont en une proportion massique dans le flux comprise entre 0,01% et 50% ,
- le ou les composés nocifs sont choisis parmi FeB, BaCO₃, carbonate de lithium, SiO₂, FeMn et Mn, et sont en une proportion massique dans le flux comprise entre 0,01% et 30%,
- le ou les composés cancérogènes ou potentiellement cancérogènes sont choisis parmi nickel, chrome, cobalt et cadmium, et sont en une proportion massique dans le flux comprise entre 0,01% et 65%, et/ou
- le ou les composés radioactifs présentent une émissivité supérieure à 1000 Bq/g, et sont en une proportion massique dans le flux comprise entre 0,001% et 5%.

**2.** Fil fourré selon la revendication précédente, **caractérisé en ce qu'**il comprend une enveloppe (2) en acier au carbone ou en acier inoxydable,

**3.** Fil fourré selon l'une des revendications précédentes, **caractérisé en ce que** l'enveloppe tubulaire (2) a une épaisseur de paroi (E) égale à au moins 10 % du diamètre externe (D) du fil (1), de préférence à au moins 20 % du diamètre externe (D) du fil (1).

**4.** Fil fourré selon l'une des revendications précédentes, **caractérisé en ce que** l'enveloppe métallique (2) tubulaire comprend un joint (4) de soudage longitudinal sur toute sa longueur (L) réalisé par soudage par faisceau laser.

**5.** Fil fourré selon l'une des revendications précédentes, **caractérisé en ce que** le taux de remplissage du fil (1) avec le flux (2) est supérieur ou égal à 8 % en masse, de préférence entre 10 et 50 % en masse (% en masse de fil).
